# FASCICULE DE BREVET EUROPEEN

(11) **EP 3 384 061 B1**
(45) Date de publication et mention de la délivrance du brevet: **05.02.2020**
(21) Numéro de dépôt: 16819147.6
(22) Date de dépôt: 01.12.2016
(51) Int. Cl.: C22C 21/16, C22C 21/18, C22F 1/057

(54) **ALLIAGE ALUMINIUM CUIVRE LITHIUM À RESISTANCE MÉCANIQUE ET TENACITÉ AMELIORÉES**
ALUMINIUM-KUPFER-LITHIUM-LEGIERUNG MIT VERBESSERTER MECHANISCHER FESTIGKEIT UND ERHÖHTER ZÄHIGKEIT
ALUMINIUM-COPPER-LITHIUM ALLOY HAVING IMPROVED MECHANICAL STRENGTH AND IMPROVED TOUGHNESS

(30) Priorité: 04.12.2015 FR 1561852
(43) Date de publication de la demande: 10.10.2018
(73) Titulaire: Constellium Issoire, 63500 Issoire (FR)
(72) Inventeur: WHELCHEL, Ricky, 38000 Grenoble (FR); ARBAB, Alireza, 38140 Rives-sur-Fure (FR); BES, Bernard, 38180 Seyssins (FR); SIGLI, Christophe, 38000 Grenoble (FR)
(74) Mandataire: Constellium - Propriété Industrielle
(86) Numéro de dépôt international: PCT/FR2016/053175
(87) Numéro de publication internationale: WO 2017/093680

(56) Documents cités:
- WO-A2-2012/112942
- FR-A1- 2 947 282
- HUANG B P ET AL: "Independent and combined roles of trace Mg and Ag additions in properties precipitation process and precipitation kinetics of Al-Cu-Li-(Mg)-(Ag)-Zr-Ti alloys", ACTA MATERIALIA, ELSEVIER, OXFORD, GB, vol. 46, no. 12, 24 juillet 1998 (1998-07-24), pages 4381-4393, XP027395678, ISSN: 1359-6454 [extrait le 1998-07-24]

## Description

### Domaine de l'invention

L'invention concerne les produits en alliages aluminium-cuivre-lithium, plus particulièrement, de tels produits, leurs procédés de fabrication et d'utilisation, destinés en particulier à la construction aéronautique et aérospatiale.

### Etat de la technique

Des produits, notamment des produits épais laminés et/ou forgés en alliage d'aluminium sont développés pour produire par découpage, surfaçage ou usinage dans la masse des pièces de haute résistance destinées notamment à l'industrie aéronautique, à l'industrie aérospatiale ou à la construction mécanique.

Les alliages d'aluminium contenant du lithium sont très intéressants à cet égard, car le lithium peut réduire la densité de l'aluminium de 3 % et augmenter le module d'élasticité de 6 % pour chaque pourcent en poids de lithium ajouté. Pour que ces alliages soient sélectionnés dans les avions, leur performance par rapport aux autres propriétés d'usage doit atteindre celle des alliages couramment utilisés, en particulier en terme de compromis entre les propriétés de résistance mécanique statique (limite d'élasticité, résistance à la rupture) et les propriétés de tolérance aux dommages (ténacité, résistance à la propagation des fissures en fatigue), ces propriétés étant en général antinomiques. Pour les produits épais, ces propriétés doivent en particulier être obtenues à quart et à mi-épaisseur et les produits doivent donc avoir une faible sensibilité à la trempe. On dit qu'un produit est sensible à la trempe si ses caractéristiques mécaniques statiques, telles que sa limite élastique, décroissent lorsque la vitesse de trempe décroit. La vitesse de trempe est la vitesse de refroidissement moyenne du produit au cours de la trempe.

Ces alliages doivent également présenter une résistance à la corrosion suffisante, pouvoir être mis en forme selon les procédés habituels et présenter de faibles contraintes résiduelles de façon à pouvoir être usinés de façon intégrale.

On connait plusieurs alliages Al-Cu-Li pour lesquels une addition d'argent est effectuée.

Le brevet US 5,032,359 décrit une vaste famille d'alliages aluminium-cuivre-lithium dans lesquels l'addition de magnésium et d'argent, en particulier entre 0,3 et 0,5 pourcent en poids, permet d'augmenter la résistance mécanique.

Le brevet US 7,229,509 décrit un alliage comprenant (% en poids) : (2,5-5,5)Cu, (0,1-2,5) Li, (0,2-1,0) Mg, (0,2-0,8) Ag, (0,2-0,8) Mn, 0,4 max Zr ou d'autres agents affinant le grain tels que Cr, Ti, Hf, Sc, V, présentant notamment une ténacité K_{1C}(L)>37,4 MPa√m pour une limite élastique R_{p0,2}(L) > 448,2 MPa (produits d'épaisseur supérieure à 76,2 mm) et notamment une ténacité K_{1C}(L)>38,5 MPa√m pour une limite élastique R_{p0,2}(L) > 489,5 MPa (produits d'épaisseur inférieure à 76,2 mm).

L'alliage AA2050 comprend (% en poids) : (3,2-3,9) Cu, (0,7-1,3) Li, (0,20-0,6) Mg, (0,20-0,7) Ag, 0,25max. Zn, (0,20-0,50) Mn, (0,06-0,14) Zr et l'alliage AA2095 (3,7-4,3)Cu, (0,7-1,5) Li, (0,25-0,8) Mg, (0,25-0,6) Ag, 0,25max. Zn, 0,25 max. Mn, (0,04-0,18) Zr. Les produits en alliage AA2050 sont connus pour leur qualité en termes de résistance mécanique statique et de ténacité, notamment pour des produits laminés épais et sont sélectionnés dans certains avions.

La demande de brevet WO2009036953 décrit un alliage de composition en %: en poids Cu 3,4 à 5,0, Li 0,9 à 1,7, Mg 0,2 à 0,8, Ag 0,1 à 0,8, Mn 0,1 à 0,9, Zn jusqu'à 1,5, et un ou plusieurs éléments choisis dans le groupe constitué par: (Zr environ 0,05 à 0,3, Cr environ 0,05 à 0,3, Ti environ 0,03 à 0,3, Sc environ 0,05 à 0,4, Hf environ 0,05 à 0,4), Fe <0,15, Si <0,5, impuretés normales et inévitables et reste de l'aluminium.

La demande de brevet US 2009/142222 A1 décrit des alliages comprenant (en % en poids), 3,4 à 4,2% de Cu, 0,9 à 1,4 % de Li, 0,3 à 0,7 % de Ag, 0,1 à 0,6% de Mg, 0,2 à 0,8 % de Zn, 0,1 à 0,6 % de Mn et 0,01 à 0,6 % d'au moins un élément pour le contrôle de la structure granulaire.

La demande de brevet WO2011130180 décrit des produits corroyés en alliage d'aluminium comprenant (en % en poids) de 2,75 à 5,0% de Cu, de 0,2 à 0,8.% de Mg, où le rapport entre le cuivre rapport à magnésium (Cu / Mg) dans l'alliage d'aluminium est dans la plage allant d'environ 6,1 à environ 17, de 0,1 à 1,10% de Li, de 0,3 à 2,0% d'Ag, de 0,5 à 1,5% de zinc, jusqu'à 1,0.% de Mn, le reste étant de l'aluminium, des éléments accessoires optionnels, et des impuretés.

La demande de brevet WO2013169901 décrit des alliages d'aluminium comprenant (en % en poids) de 3,5 à 4,4 % Cu, 0,45 à 0,75 % de Mg, de 0,45 à 0,75 % de Zn, 0,65 - 1,15 % Li, 0,1 à 1,0 % de Ag, 0,05 à 0,50 . % d'au moins un élément de contrôle de la structure des grains, jusqu'à 1,0 % de Mn, jusqu'à 0,15 % de Ti, jusqu'à 0,12 % de Si, jusqu'à 0,15 % Fe, jusqu'à 0,10. % de tout autre élément, avec le total de ces autres éléments ne dépassant pas 0,35 %, le reste étant de l'aluminium.

On connait par ailleurs des alliages Al-Cu-Li dans lesquels l'addition d'argent est optionnelle ou n'est pas mentionnée.

Le brevet US 5,455,003 décrit un procédé de fabrication d'alliages Al-Cu-Li qui présentent une résistance mécanique et une ténacité améliorés à température cryogénique, en particulier grâce à un écrouissage et un revenu appropriés. Ce brevet recommande en particulier la composition, en pourcentage en poids, Cu = 3,0 - 4,5, Li = 0,7 - 1,1, Ag = 0 - 0,6, Mg = 0,3-0,6 et Zn = 0 - 0,75.

Le brevet US 5,211,910 décrit des alliages pouvant comprendre (en % en poids) de 1 à 7 % de Cu, de 0,1 à 4 % de Li, de 0,01 à 4 % de Zn, de 0,05 à 3 % de Mg, de 0,01 à 2 % d'Ag, de 0,01 à 2 % d'un affinant de grain choisi parmi Zr, Cr, Mn, Ti, Hf, V, Nb, B et TiB2, le reste étant Al avec des impuretés accidentelles.

Le brevet US 5,234,662 décrit des alliages de composition (en % en poids), Cu : 2,60 - 3,30, Mn : 0,0 - 0,50, Li : 1,30 - 1,65, Mg : 0,0 - 1,8, éléments maîtrisant la structure granulaire choisis parmi Zr et Cr : 0,0 - 1,5.

Le brevet US 5,259,897 décrit dans un mode de réalisation des alliages à base d'aluminium ayant les compositions en % en poids dans les plages suivantes: 3,5 à 5,0 Cu, 0,8 à 1,8 Li, de 0,25 à 1,0 Mg, de 0,01 à 1,5 raffineur grain choisi parmi Zr, Cr, Mn, Ti, Hf, V, Nb, B, TiB2, et leurs mélanges, et le reste étant essentiellement Al.

Le brevet US 7,438,772 décrit des alliages comprenant, en pourcentage en poids, Cu : 3-5, Mg : 0,5-2, Li : 0,01-0,9 et décourage l'utilisation de teneur en lithium plus élevées en raison d'une dégradation du compromis entre ténacité et résistance mécanique.

La demande de brevet WO2009103899 décrit un produit laminé essentiellement non recristallisé comprenant en % en poids: 2,2 à 3,9% en poids de Cu, 0,7 à 2,1% en poids de Li; 0,2 à 0,8% en poids de Mg; 0,2 à 0,5% en poids de Mn; 0,04 à 0,18% en poids de Zr; moins de 0,05% en poids de Zn et, facultativement, 0,1 à 0,5% en poids de Ag, le reste étant de l'aluminium et des impuretés inévitables, ayant une faible propension à la bifurcation fissure lors d'un test de fatigue dans la direction de LS.

La demande de brevet WO2010149873 concerne un produit corroyé tel qu'un extrudé, laminé et / ou forgé, en alliage à base d'aluminium comprenant, en % en poids, Cu: 3,0 - 3,9; Li: 0,8 à 1,3; Mg: 0,6 à 1,0; Zr: 0,05 à 0,18; Ag: 0,0 à 0,5; Mn: 0,0 à 0,5; Fe + Si ≤ 0,20; Zn ≤ 0,15; au moins un élément parmi Ti: de 0,01 à 0,15; Sc: 0,05 à 0,3; Cr: 0,05 à 0,3; Hf: 0,05 à 0,5; d'autres éléments ≤0,05 chacun et ≤ 0,15 au total, le reste étant de l'aluminium.

La demande de brevet WO2012112942 des produits d'épaisseur au moins 12,7 mm en alliage d'aluminium contenant (en % en poids) de 3,00 à 3,80 % de Cu, de 0,05 à 0,35 . % de Mg, de 0,975 à 1,385 % de Li, dans laquelle la teneur en Li est comprise entre - 0,3 Mg- 0.15Cu + 1,65 et -0,3 Mg- 0.15Cu + 1,55, de 0,05 à 0,50 % d'au moins un élément permettant le contrôle de la structure granulaire, choisi dans le groupe constitué de Zr, Sc, Cr, V, Hf, d'autres éléments des terres rares, et des combinaisons de ceux-ci, jusqu'à 1,0 % de Zn, jusqu'à 1,0 % de Mn, jusqu'à 0,12 % de Si, jusqu'à 0,15 % Fe, jusqu'à 0,15 % de Ti, jusqu'à 0,10 .% de tout autre élément, avec le total de ces autres éléments ne dépassant pas 0,35 %, reste aluminium.

On constate que les produits selon l'art antérieur faits en alliage ne contenant essentiellement pas d'argent ne permettent pas d'obtenir des propriétés aussi avantageuses que celles des produits fait avec des alliages contenant de l'argent tels que l'alliage AA2050. Notamment le compromis avantageux entre la résistance mécanique et la ténacité n'est pas atteint pour des produits épais, en particulier dont l'épaisseur est au moins 12 mm ou au moins 40 mm, tout en maintenant une résistance à la corrosion satisfaisante. L'addition d'argent, qui est un élément peu commun dans les alliages d'aluminium, pourrait contaminer d'autres alliages lors du recyclage et affecter leurs propriétés car il a un effet pour de faibles teneurs. De plus, la limitation de la quantité d'argent est économiquement très favorable. Des produits ayant une faible sensibilité à la trempe seraient par ailleurs particulièrement avantageux.

Il existe un besoin pour des produits en alliage aluminium-cuivre-lithium, notamment des produits épais, présentant des propriétés améliorées par rapport à celles des produits connus ne contenant essentiellement pas d'argent, en particulier en termes de compromis entre les propriétés de résistance mécanique statique et les propriétés de tolérance aux dommages, de stabilité thermique, de résistance à la corrosion et d'aptitude à l'usinage, tout en ayant une faible densité.

### Objet de l'invention

Un premier objet de l'invention est un produit laminé et/ou forgé en alliage à base d'aluminium comprenant, en % en poids,
Cu : 3,2 - 4,0 ;
Li : 0,80 - 0,95 ;
Zn : 0,45 - 0,70 ;
Mg : 0,15 - 0,70 ;
Zr : 0,07 - 0,15 ;
Mn : 0,1 - 0,6 ;
Ag: < 0,15 ;
Fe + Si ≤ 0,20 ;
au moins un élément parmi
Ti: 0,01 - 0,15 ;
Sc : 0,02 - 0,15, préférentiellement 0,02-0,1 ;
Cr : 0,02 - 0,3, préférentiellement 0,02 - 0,1 ;
Hf: 0,02 - 0,5 ;
V : 0,02 - 0,3, préférentiellement 0,02 -0,1 ;
autres éléments ≤ 0,05 chacun et ≤ 0,15 au total, reste aluminium.

Un deuxième objet de l'invention est un procédé de fabrication d'un produit selon l'invention dans lequel
a) on élabore un bain de métal liquide à base d'aluminium en alliage selon l'invention ;
b) on coule une forme brute à partir dudit bain de métal liquide ;
c) on homogénéise ladite forme brute à une température comprise entre 450°C et 550° et de préférence entre 480 °C et 530°C pendant une durée comprise entre 5 et 60 heures ;
d) on déforme à chaud et optionnellement à froid ladite forme brute préférentiellement jusqu'à une épaisseur d'au moins 12 mm, préférentiellement d'au moins 15 mm et, plus préférentiellement encore d'au moins 40 mm en un produit laminé et/ou forgé ;
e) on met en solution entre 490 et 530 °C pendant 15 min à 8 h et on trempe ledit produit ;
f) on détensionne, préférentiellement par traction, de façon contrôlée ledit produit avec une déformation permanente de 1 à 7 % et préférentiellement d'au moins 4% ;
g) on réalise un revenu dudit produit comprenant un chauffage à une température comprise entre 130 et 170 ° C, préférentiellement entre 140 et 160°C et, plus préférentiellement encore entre 140 et 150°C pendant 5 à 100 heures et de préférence de 10 à 50h.

Encore un autre objet de l'invention est un élément de structure d'avion comprenant un produit selon l'invention.

### Description des figures

La figure 1 représente le compromis entre la limite d'élasticité R_{p0,2} dans la direction TL et la ténacité K_{1C} dans la direction T-L pour une épaisseur de 50 mm.
La figure 2 représente le compromis entre la limite d'élasticité R_{p0,2} dans la direction TC et la ténacité K_{1C} dans la direction S-L pour une épaisseur de 50 mm.

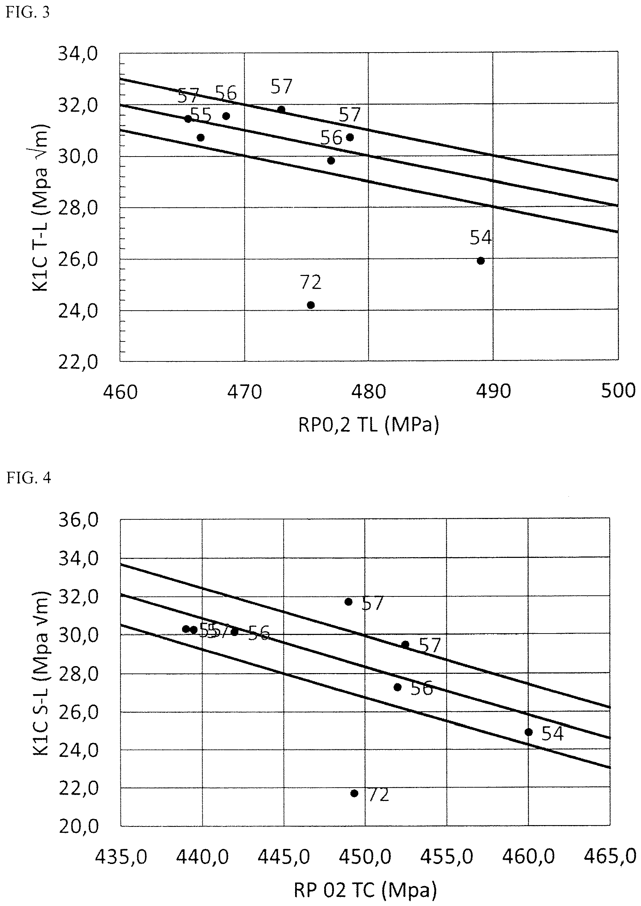

La figure 3 représente le compromis entre la limite d'élasticité R_{p0,2} dans la direction TL et la ténacité K_{1C} dans la direction T-L pour une épaisseur de 102 mm.
La figure 4 représente le compromis entre la limite d'élasticité R_{p0,2} dans la direction TC et la ténacité K_{1C} dans la direction S-L pour une épaisseur de 102 mm.
La figure 5 représente le compromis entre la limite d'élasticité R_{p0,2} dans la direction TC et la ténacité K_{1C} dans la direction S-L pour une épaisseur de 130 mm.
La figure 6 représente l'écart de ténacité pour de conditions de trempe en fonction de l'écart de limite d'élasticité pour ces deux conditions de trempe pour les essais de l'exemple 2.

### Description de l'invention

Sauf mention contraire, toutes les indications concernant la composition chimique des alliages sont exprimées comme un pourcentage en poids basé sur le poids total de l'alliage. L'expression 1,4 Cu signifie que la teneur en cuivre exprimée en % en poids est multipliée par 1,4. La désignation des alliages se fait en conformité avec les règlements de The Aluminium Association, connus de l'homme du métier. Les définitions des états métallurgiques sont indiquées dans la norme européenne EN 515 (EN515 :1993).
Sauf mention contraire, les caractéristiques mécaniques statiques, en d'autres termes la résistance à la rupture Rₘ, la limite d'élasticité conventionnelle à 0,2% d'allongement R_{p0,2} (« limite d'élasticité ») et l'allongement à la rupture A%, sont déterminés par un essai de traction selon la norme EN ISO 6892-1 :2009 (anciennement EN 10002-1:2001), le prélèvement et le sens de l'essai étant définis par la norme EN 485-1 (EN 485-1:2008+A1:2009).
Le facteur d'intensité de contrainte (K_{Q}) est déterminé selon la norme ASTM E 399 (ASTM E 399-12e3). La norme ASTM E 399 (ASTM E 399-12e3) donne les critères qui permettent de déterminer si K_{Q} est une valeur valide de K_{1C}. Pour une géométrie d'éprouvette donnée, les valeurs de K_{Q} obtenues pour différents matériaux sont comparables entre elles pour autant que les limites d'élasticité des matériaux soient du même ordre de grandeur.
Une courbe donnant le facteur d'intensité de contrainte effectif en fonction de l'extension de fissure effective, connue comme la courbe R, est déterminée selon la norme ASTM E 561 (ASTM E 561-10e2). Le facteur d'intensité de contrainte critique K_{C}, en d'autres termes le facteur d'intensité qui rend la fissure instable, est calculé à partir de la courbe R. Le facteur d'intensité de contrainte K_{CO} est également calculé en attribuant la longueur de fissure initiale au commencement de la charge monotone, à la charge critique. Ces deux valeurs sont calculées pour une éprouvette de la forme requise. Kₐₚₚ représente le facteur K_{CO} correspondant à l'éprouvette qui a été utilisée pour effectuer l'essai de courbe R. K_{eff} représente le facteur K_{C} correspondant à l'éprouvette qui a été utilisée pour effectuer l'essai de courbe R.
Les études de corrosion sous contrainte ont été effectuées selon les normes ASTM G47 et G49 (ASTM G47-98(2011) et G49-85(2011)) dans les directions TC et TL pour des échantillons prélevés à mi épaisseur.

Selon la présente invention, une classe sélectionnée d'alliages d'aluminium contenant des quantités spécifiques et critiques de cuivre, de lithium, de magnésium, de zinc, de manganèse et de zirconium mais ne contenant essentiellement pas d'argent permet de préparer des produits corroyés présentant un compromis amélioré entre ténacité et résistance mécanique, et une bonne résistance à la corrosion.
Les présents inventeurs ont constaté que de manière surprenante, il est possible pour des produits épais d'obtenir un compromis au moins équivalent entre les propriétés de résistance mécanique statique et les propriétés de tolérance aux dommages que celui obtenu avec un alliage aluminium-cuivre-lithium contenant de l'argent, tels que notamment l'alliage AA2050, en réalisant une sélection étroite des quantités de lithium, de cuivre, de magnésium, de manganèse, de zinc et de zirconium .

La teneur en cuivre des produits selon l'invention est comprise entre 3,2 et 4,0 % en poids. Dans une réalisation avantageuse de l'invention, la teneur en cuivre est au moins de 3,3 ou préférentiellement au moins de 3,4 % en poids et/ou au plus de 3,8 et préférentiellement au plus de 3,7 % en poids.

La teneur en lithium des produits selon l'invention est comprise entre 0,80 et 0,95 % en poids. Avantageusement, la teneur en lithium est comprise entre 0,84 % et 0,93 % en poids. De manière préférée, la teneur en lithium est au moins de 0,86 % en poids.
La teneur en argent est inférieure à 0,15 % en poids, de préférence inférieure à 0,10 % en poids et, plus préférentiellement encore inférieure à 0,05 % en poids. Les présents inventeurs ont constaté que le compromis avantageux entre la résistance mécanique et la tolérance aux dommages connu pour des alliages contenant typiquement 0,3 à 0,4 % en poids d'argent peut être obtenu pour des alliages ne contenant essentiellement pas d'argent avec la sélection de composition effectuée.
La teneur en magnésium des produits selon l'invention est comprise entre 0,15 et 0,7 % en poids et de manière préférée entre 0,2 et 0,6 % en poids. Avantageusement la teneur en magnésium est au moins de 0,30 % en poids préférentiellement au moins 0,34 % en poids et de manière préférée au moins 0,38 % en poids. Les présents inventeurs ont constaté que lorsque la teneur en magnésium est inférieure à 0,30 % en poids le compromis avantageux entre la résistance mécanique et la tolérance aux dommages n'est pas obtenu pour les épaisseurs les plus élevées, en particulier les épaisseurs supérieures à 76 mm.
Les présents inventeurs ont constaté que pour les teneurs les plus faibles en magnésium, typiquement des teneurs inférieures à 0,5% en poids, préférentiellement inférieures à 0,45% en poids, la présence d'une faible quantité d'argent peut être avantageuse, préférentiellement la teneur en magnésium est au moins égale à (0,3 - 1,5 ^{∗} Ag). Dans un mode de réalisation de l'invention, la teneur en magnésium est au plus de (0,55 - 1,5 ^{∗} Ag).
Dans un mode de réalisation de l'invention, la teneur en magnésium est au plus de 0,45 % en poids et préférentiellement au plus de 0,43 % en poids. Dans un mode de réalisation avantageux, la teneur en magnésium est au plus de 0,45 % en poids et préférentiellement au plus de 0,43 % en poids et la teneur en Ag est inférieure à 0,15 % en poids et, préférentiellement inférieure à 0,10 % en poids.
La teneur en zinc est comprise entre 0,45 et 0,70 % en poids. Avantageusement la teneur en zinc est comprise entre 0,50 et 0,60 % en poids ce qui peut contribuer à atteindre le compromis recherché entre la ténacité et la résistance mécanique.
La teneur en zirconium est comprise entre 0,07 et 0,15 % en poids et de préférence entre 0,09 et 0,12% en poids.
La teneur en manganèse est comprise entre 0,1 et 0,6 % en poids. Avantageusement la teneur en manganèse est comprise entre 0,2 et 0,4 % en poids permet d'améliorer la ténacité sans compromettre la résistance mécanique. En l'absence d'addition de manganèse, le compromis recherché n'est pas atteint.
La somme de la teneur en fer et de la teneur en silicium est au plus de 0,20 % en poids. De préférence, les teneurs en fer et en silicium sont chacune au plus de 0,08 % en poids. Dans une réalisation avantageuse de l'invention, les teneurs en fer et en silicium sont au plus de 0,06 % et 0,04 % en poids, respectivement.
L'alliage contient également au moins un élément pouvant contribuer au contrôle de la taille de grain choisi parmi V, Cr, Sc, Hf et Ti, la quantité de l'élément, s'il est choisi, étant de 0,02 à 0,3 % en poids, préférentiellement 0,02 à 0,1% en poids pour V, Cr ; de 0,02 à 0,15 % en poids, préférentiellement 0,02 à 0,1% en poids pour Sc ; 0,02 à 0,5 % en poids pour Hf et de 0,01 à 0,15 % en poids pour Ti. De manière préférée, on choisit entre 0,02 et 0,10 % en poids de titane.

L'alliage selon l'invention est particulièrement destiné à la fabrication de produits laminés et/ou forgés épais et, plus particulièrement encore, de produits laminés épais. Par produits épais, on entend dans le cadre de la présente invention, des produits dont l'épaisseur est au moins de 12 mm et de préférence au moins de 40 mm. Dans un mode de réalisation avantageux, les produits laminés et/ou forgés selon l'invention ont une épaisseur d'au moins 76 mm ou même d'au moins 121 mm.
Les produits épais selon l'invention présentent un compromis entre résistance mécanique et ténacité particulièrement avantageux.

Les produits selon l'invention, présentent dans un état laminé et/ou forgé, mis en solution, trempé, tractionné et revenu au moins un des couples de caractéristiques suivants pour des épaisseurs comprises entre 40 et 75 mm :
(i) à quart-épaisseur, une limite d'élasticité R_{p0,2}(TL) ≥ 480 MPa et de préférence R_{p0,2}(TL) ≥ 490 MPa et une ténacité K_{1C} (T-L) ≥ 31 MPa√m et avantageusement telle que K_{1C} (T-L) ≥ - 0,175 R_{p0,2}(TL) + 119,2, de préférence K_{1C} (T-L) ≥ - 0,175 R_{p0,2}(TL) + 120,5 et de manière préférée K_{1C} (T-L) ≥ - 0,175 R_{p0,2}(TL) + 121,5,
(ii) à mi-épaisseur, une limite d'élasticité R_{p0,2}(TC) ≥ 450 MPa et de préférence R_{p0,2}(TC) ≥ 455 MPa et une ténacité K_{1C} (S-L) ≥ 24 MPa√m et avantageusement telle que K_{1C} (S-L) ≥ - 0,34 R_{p0,2}(TC) + 185,6, de préférence K_{1C} (S-L) ≥ - 0,34 R_{p0,2}(TC) + 187,2 et de manière préférée K_{1C} (S-L) ≥ - 0,34 R_{p0,2}(TC) + 188,7.

Les produits selon l'invention dans lesquels la teneur en magnésium est au moins 0,34 % en poids et de préférence au moins 0,38% en poids et la teneur en argent est inférieure à 0,10% en poids, préférentiellement inférieure à 0,05 % en poids, sont avantageux et présentent, dans un état laminé et/ou forgé, mis en solution, trempé, détensionné préférentiellement par traction et revenu, au moins un des couples de caractéristiques suivants pour des épaisseurs comprises entre 76 et 150 mm :
(i) pour des épaisseurs de 76 à 120 mm, à quart-épaisseur, une limite d'élasticité R_{p0,2}(TL) ≥ 460 MPa et de préférence R_{p0,2}(TL) ≥ 470 MPa et avantageusement une ténacité K_{1C} (T-L) ≥ 27 MPa√m et telle que K_{1C} (T-L) ≥ - 0,1 R_{p0,2}(TL) + 77, de préférence K_{1C} (T-L) ≥ - 0,1 R_{p0,2}(TL) + 78 et de manière préférée K_{1C} (T-L) ≥ - 0,1 R_{p0,2}(TL) + 79,
(ii) pour des épaisseurs de 76 à 120 mm, à mi-épaisseur, une limite d'élasticité R_{p0,2}(TC) ≥ 435 MPa et de préférence R_{p0,2}(TC) ≥ 445 MPa et une ténacité K_{1C} (S-L) ≥ 23MPa√m et avantageusement telle que K_{1C} (S-L) ≥ - 0,25 R_{p0,2}(TC) + 139,25, de préférence K_{1C} (S-L) ≥ - 0,25 R_{p0,2}(TC) + 140,85 et de manière préférée K_{1C} (S-L) ≥ - 0,25 R_{p0,2}(TC) + 142,45,
(iii) pour des épaisseurs de 121 à 150 mm, à mi-épaisseur, une limite d'élasticité R_{p0,2}(TC) ≥ 420 MPa et de préférence R_{p0,2}(TC) ≥ 425 MPa et une ténacité Kic (S-L) ≥ 20 MPa√m et avantageusement telle que K_{1C} (S-L) ≥ - 0,25 R_{p0,2}(TC) + 133, de préférence K_{1C} (S-L) ≥ - 0,25 R_{p0,2}(TC) + 133, 5 et de manière préférée K_{1C} (S-L) ≥ - 0,25 R_{p0,2}(TC) + 134.
Les produits selon l'invention présentent également des propriétés avantageuses en termes de ténacité telles que mesurées selon la norme ASTM E561 (ASTM E 561-10e2). Ainsi les produits selon l'invention présentent, dans un état laminé et/ou forgé, mis en solution, trempé, détensionné préférentiellement par traction et revenu, au moins un des couples de caractéristiques suivants pour des épaisseurs comprises entre 40 et 150 mm, la ténacité en contrainte plane Kₐₚₚ étant mesurée sur des éprouvettes de type CCT406 (2ao = 101.6 mm)
(i) pour des épaisseurs de 40 à 75 mm Kₐₚₚ, , dans la direction L-T d'au moins 105 MPa √m et de préférence d'au moins 110 MPa √m et une limite d'élasticité R_{p0,2}(L) d'au moins 500 MPa et de préférence d'au moins 510 MPa,
(ii) pour des épaisseurs de 40 à 75 mm Kₐₚₚ, , dans la direction T-L d'au moins 60 MPa √m et de préférence d'au moins 70 MPa √m et une limite d'élasticité R_{p0,2}(TL) d'au moins 480 MPa et de préférence d'au moins 490 MPa,
(iii) pour des épaisseurs de 76 à 120 mm Kₐₚₚ, , dans la direction L-T d'au moins 80 MPa √m et de préférence d'au moins 90 MPa √m et une limite d'élasticité R_{p0,2}(L) d'au moins 475 MPa et de préférence d'au moins 485 MPa,
(iv) pour des épaisseurs de 76 à 120 mm Kₐₚₚ, , dans la direction T-L d'au moins 40 MPa √m et de préférence d'au moins 50 MPa √m et une limite d'élasticité R_{p0,2}(TL) d'au moins 455 MPa et de préférence d'au moins 465 MPa,
(v) pour des épaisseurs de 121 à 150 mm Kₐₚₚ, , dans la direction L-T d'au moins 75 MPa √m et de préférence d'au moins 80 MPa √m et une limite d'élasticité R_{p0,2}(L) d'au moins 470 MPa et de préférence d'au moins 480 MPa,
(vi) pour des épaisseurs de 121 à 150 mm Kₐₚₚ,, dans la direction T-L d'au moins 40 MPa √m et de préférence d'au moins 45 MPa √m et une limite d'élasticité R_{p0,2}(TL) d'au moins 445 MPa et de préférence d'au moins 455 MPa,

La résistance à la corrosion sous contrainte des produits de l'invention est généralement élevée ; avantageusement le nombre de jours avant défaillance testé selon les normes ASTM G47 et G49 (ASTM G47-98(2011) et G49-85(2011)) à mi-épaisseur pour une contrainte de 350 MPa dans la direction TC est au moins 30 jours et de préférence, notamment pour des tôles dont l'épaisseur est comprise entre 40 et 75 mm, le nombre de jours avant défaillance pour une contrainte de 450 MPa dans la direction TC est au moins 30 jours.

Le procédé de fabrication des produits selon l'invention comprend des étapes d'élaboration, coulée, laminage et/ou forgeage, mise en solution, trempe, détensionnement et revenu.
Dans une première étape, on élabore un bain de métal liquide de façon à obtenir un alliage d'aluminium de composition selon l'invention.
Le bain de métal liquide est ensuite coulé sous une forme brute typiquement une plaque de laminage ou une ébauche de forge.

La forme brute est ensuite homogénéisée à une température comprise entre 450°C et 550° et de préférence entre 480 °C et 530°C pendant une durée comprise entre 5 et 60 heures.

Après homogénéisation, la forme brute est en général refroidie jusqu'à température ambiante avant d'être préchauffée en vue d'être déformée à chaud. Le préchauffage a pour objectif d'atteindre une température de préférence comprise entre 400 et 550 °C et de manière préférée de l'ordre de 500 °C permettant la déformation de la forme brute. La déformation à chaud est effectuée par laminage et/ou forgeage de façon à obtenir un produit laminé et/ou forgé dont l'épaisseur est de préférence d'au moins 12 mm et de manière préférée d'au moins 40 mm. Le produit ainsi obtenu est ensuite mis en solution par traitement thermique entre 490 et 550 °C pendant 15 min à 8 h, puis trempé typiquement avec de l'eau à température ambiante. Le produit subit ensuite un détensionnementcontrôlé, préférentiellement par traction et/ou par compression, avec une déformation permanente de 1 à 7 % et préférentiellement d'au moins 2%. Les produits laminés subissent de préférence une traction contrôlée avec une déformation permanente au moins égale à 4 %. Dans un mode de réalisation avantageux de l'invention permettant notamment d'améliorer le compromis entre résistance mécanique statique et ténacité, la traction contrôlée est réalisée avec une déformation permanente comprise entre 5 et 7%. Les états métallurgiques préférés sont les états T84 et T86, préférentiellement T86. Des étapes connues telles que le laminage, le planage, le redressage, la mise en forme peuvent être optionnellement réalisées après mise en solution et trempe et avant ou après la traction contrôlée. Dans un mode de réalisation de l'invention, on réalise une étape de laminage à froid d'au moins 7 % et de préférence d'au moins 9% avant de réaliser une traction contrôlée avec une déformation permanente de 1 à 3 %.
Un revenu est réalisé comprenant un chauffage à une température comprise entre 130 et 170°C, préférentiellement entre 140 et 160°C et, plus préférentiellement encore, entre 140 et 150°C pendant 5 à 100 heures et de préférence de 10 à 50h. Les présents inventeurs ont constaté que le compromis entre résistance mécanique et ténacité peut être amélioré en réalisant le revenu dans le domaine préféré. Dans un mode de réalisation avantageux, la traction contrôlée est réalisée avec une déformation permanente comprise entre 5 et 7% et le revenu est réalisé à une température comprise entre 140 et 160°C, préférentiellement 140 et 150°C, pendant une durée de 10 à 30h.

Les produits selon l'invention peuvent de manière avantageuse être utilisés dans des éléments de structure, en particulier d'avion. On appelle ici « élément de structure » ou « élément structural » d'une construction mécanique une pièce mécanique pour laquelle les propriétés mécaniques statiques et/ou dynamiques sont particulièrement importantes pour la performance de la structure, et pour laquelle un calcul de structure est habituellement prescrit ou réalisé. Il s'agit typiquement d'éléments dont la défaillance est susceptible de mettre en danger la sécurité de ladite construction, de ses utilisateurs, de ses usagers ou d'autrui. Dans le cadre de la présente invention ces éléments de structure d'avion comprennent notamment les cloisons étanches (bulkheads), les ailes (tels que la peau de voilure (wing skin), les nervures (ribs) et longerons (spars)) et l'empennage composé notamment de stabilisateurs horizontaux et verticaux (horizontal or vertical stabilisers), ainsi que les portes.
L'utilisation, d'un élément de structure incorporant au moins un produit selon l'invention ou fabriqué à partir d'un tel produit est avantageux, en particulier pour la construction aéronautique. Les produits selon l'invention sont particulièrement avantageux pour la réalisation de produits usinés dans la masse, tels que notamment des éléments intrados ou extrados dont la peau et les raidisseurs proviennent d'un même produit de départ, des longerons et des nervures, de même que toute autre utilisation où les présentes propriétés pourraient être avantageuses

Ces aspects, ainsi que d'autres de l'invention sont expliqués plus en détails à l'aide des exemples illustratifs et non limitants suivants.

### Exemples

### Exemple 1.

Dans cet exemple, plusieurs plaques d'épaisseur 400 mm dont la composition est donnée dans le tableau 1 ont été coulées.

**Tableau 1 : Composition en % en poids des alliages Al-Cu-Li coulés sous forme de plaque.**

| | Cu | Mn | Mg | Zn | Li | Ag | Zr | Fe | Si | Ti |
|---|---|---|---|---|---|---|---|---|---|---|
| **54** | 3,61 | 0,34 | 0,17 | 0,56 | 0,93 | 0,13 | 0,10 | 0,023 | 0,015 | 0,022 |
| **55** | 3,60 | 0,52 | 0,17 | 0,54 | 0,94 | 0,13 | 0,10 | 0,023 | 0,015 | 0,021 |
| **56** | 3,60 | 0,34 | 0,43 | 0,57 | 0,93 | 0,00 | 0,10 | 0,021 | 0,015 | 0,022 |
| **57** | 3,62 | 0,55 | 0,34 | 0,56 | 0,95 | 0,00 | 0,10 | 0,017 | 0,015 | 0,023 |
| **71** | 3,62 | 0,36 | 0,43 | 0,56 | 0,90 | 0,01 | 0,10 | 0,040 | 0,024 | 0,031 |
| **72** | 3,55 | 0,00 | 0,51 | 0,56 | 0,90 | 0,00 | 0,10 | 0,035 | 0,023 | 0,029 |

Les plaques ont été homogénéisées à environ 500 °C pendant environ 12 heures puis scalpées. Les plaques ont été laminées à chaud pour obtenir des tôles ayant une épaisseur de 50 mm, 102 mm ou 130 mm. Les tôles ont été mises en solution à 527 °C et trempées avec de l'eau froide. Les tôles ont ensuite été tractionnées avec un allongement permanent de 4% ou 6%.

Les tôles ont subi un revenu à 145 °C ou à 150 °C. Des échantillons ont été prélevés à 1/4-épaisseur pour mesurer les caractéristiques mécaniques statiques en traction et la ténacité dans les directions L, TL, L-T et T-L à 1/2-épaisseur pour mesurer les caractéristiques mécaniques statiques en traction et la ténacité dans les directions TC et S-L. Les éprouvettes utilisées pour la mesure de ténacité étaient des éprouvettes de géométrie CT et avaient des dimensions telles que décrite ci-dessous :

| Epaisseur | L-T | T-L | S-L |
|---|---|---|---|
| 50mm | Epaisseur B = 20 mm | Epaisseur B = 20 mm | Epaisseur B = 15 mm |
| | Largeur W = 40 mm | Largeur W = 40 mm | Largeur W = 30 mm |
| 102mm | Epaisseur B = 40 mm | Epaisseur B = 40 mm | Epaisseur B = 30 mm |
| | Largeur W = 80 mm | Largeur W = 80 mm | Largeur W = 60 mm |
| 130mm | Epaisseur B = 40 mm | Epaisseur B = 40 mm | Epaisseur B = 30 mm |
| | Largeur W = 80 mm | Largeur W = 80 mm | Largeur W = 60 mm |

Les résultats obtenus sont présentés dans le tableau 2 et le tableau 3.

**Tableau 2 : Propriétés mécaniques statiques obtenues pour les différentes tôles.**

| Alliage | Epaisseur finale | Déformation permanente (traction contrôlée) | Revenu | RmL (MPa) | Rp02L (MPa) | A%L | RmTL (MPa) | Rp02TL (MPa) | A%TL | RmTC (MPa) | Rp02TC (MPa) | A%TC |
|---|---|---|---|---|---|---|---|---|---|---|---|---|
| 54 | 50 mm | 4% | 145°C 53h | | | | 542 | 495 | 9,3 | 540 | 464 | 6,7 |
| 54 | 50 mm | 4% | 150°C 40h | 548 | 516 | 11,1 | 545 | 499 | 9,6 | 543 | 473 | 5,8 |
| 54 | 102 mm | 4% | 150°C 40h | 535 | 500 | 9,5 | 541 | 489 | 4,9 | 510 | 460 | 1,2 |
| 55 | 50 mm | 4% | 150°C 40h | 546 | 512 | 10,2 | 536 | 490 | 9,0 | 528 | 464 | 5,5 |
| 55 | 102 mm | 4% | 145°C 53h | | | | 517 | 467 | 7,3 | 503 | 439 | 4,2 |
| 56 | 50 mm | 4% | 145°C 53h | | | | 540 | 491 | 10,0 | 540 | 463 | 5,3 |
| 56 | 50 mm | 6% | 150°C 22h | | | | 527 | 481 | 11,6 | 533 | 453 | 7,0 |
| 56 | 50 mm | 6% | 150°C 30h | | | | 538 | 493 | 10,2 | 536 | 461 | 5,2 |
| 56 | 50 mm | 6% | 150°C 40h | | | | 542 | 499 | 9,6 | 544 | 467 | 6,2 |
| 56 | 50 mm | 4% | 150°C 40h | 551 | 522 | 10,3 | 543 | 494 | 9,1 | 549 | 468 | 6,2 |
| 56 | 102 mm | 4% | 145°C 53h | | | | 523 | 469 | 7,4 | 520 | 442 | 4,8 |
| 56 | 102 mm | 4% | 150°C 40h | 532 | 500 | 9,7 | 534 | 477 | 5,9 | 524 | 452 | 3,6 |
| 57 | 102 mm | 4% | 145°C 53h | | | | 518 | 466 | 7,7 | 509 | 440 | 4,2 |
| 57 | 102 mm | 6% | 150°C 30h | | | | 521 | 473 | 8,1 | 509 | 449 | 3,8 |
| 57 | 102 mm | 6% | 150°C 40h | | | | 527 | 479 | 6,7 | 516 | 453 | 3,8 |
| 71 | 130 mm | 6% | 150°C 20h | | | | 509 | 454 | 7,7 | 495 | 427 | 4,3 |
| 71 | 130 mm | 6% | 150°C 30h | | | | 519 | 465 | 6,4 | 506 | 437 | 3,9 |
| 71 | 130 mm | 6% | 150°C 40h | | | | 527 | 476 | 5,4 | 515 | 447 | 3,6 |
| 71 | 130 mm | 6% | 150°C 50h | | | | 527 | 478 | 5,5 | 516 | 451 | 3,1 |
| 72 | 102 mm | 6% | 150°C 30h | | | | 526 | 475 | 3,7 | 501 | 449 | 1,7 |

**Tableau 3 : Propriétés de ténacité K1C obtenues pour les différentes tôles.**

| Alliage | Epaisseur finale | Déformation permanente (traction contrôlée) | Revenu | K1C(*:Kq) L-T (MPa √m) | K1C T-L (MPa √m) | K1C(*:Kq) S-L (MPa √m) |
|---|---|---|---|---|---|---|
| 54 | 50 mm | 4% | 145°C 53h | | 33,0 | 31,1 |
| 54 | 50 mm | 4% | 150°C 40h | 36,2* | 32,8 | 31,0 |
| 54 | 102 mm | 4% | 150°C 40h | 30,3* | 25,9 | 24,9* |
| 55 | 50 mm | 4% | 150°C 40h | 39,9 | 33,6 | 28,8 |
| 55 | 102 mm | 4% | 145°C 53h | | 30,7 | 30,3 |
| 56 | 50 mm | 4% | 145°C 53h | | 34,6 | 29,6* |
| 56 | 50 mm | 6% | 150°C 22h | | 38,0 | 33,2* |
| 56 | 50 mm | 6% | 150°C 30h | | 35,7 | 32,6* |
| 56 | 50 mm | 6% | 150°C 40h | | 33,8 | 30,6 |
| 56 | 50 mm | 4% | 150°C 40h | 39,6 | 34,4 | 29,0 |
| 56 | 102 mm | 4% | 145°C 53h | | 31,6 | 30,2 |
| 56 | 102 mm | 4% | 150°C 40h | 34,0* | 29,8 | 27,3 |
| 57 | 102 mm | 4% | 145°C 53h | | 31,5 | 30,3 |
| 57 | 102 mm | 6% | 150°C 30h | | 31,8 | 31,7 |
| 57 | 102 mm | 6% | 150°C 40h | | 30,7 | 29,5 |
| 71 | 130 mm | 6% | 150°C 20h | | 29,4 | 27,7 |
| 71 | 130 mm | 6% | 150°C 30h | | 26,3 | 25,1 |
| 71 | 130 mm | 6% | 150°C 40h | | 24,5 | 21,4* |
| 71 | 130 mm | 6% | 150°C 50h | | 23,9 | 22,1 |
| 72 | 102 mm | 6% | 150°C 30h | | 24,2 | 21,7 |

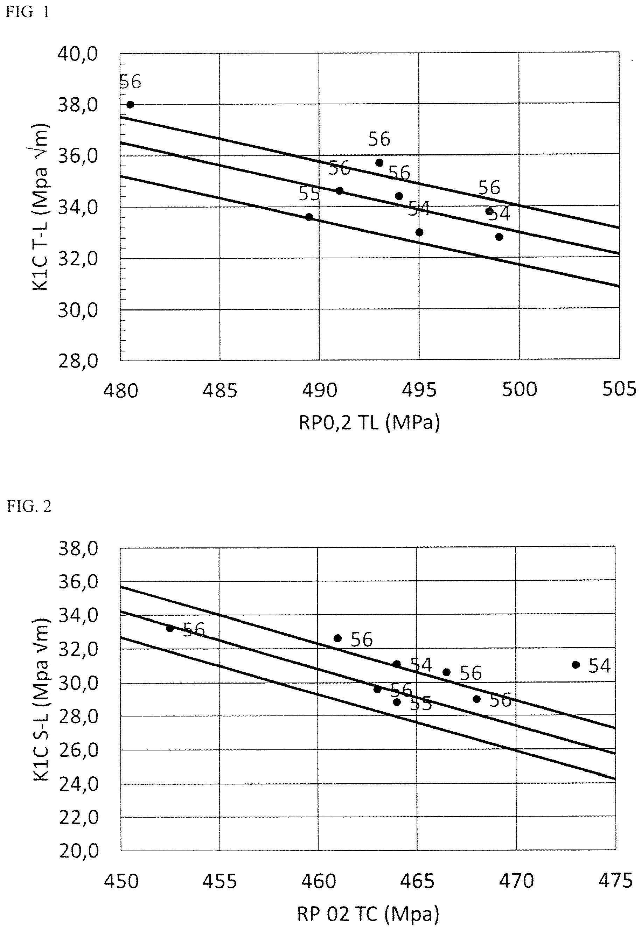

Les résultats sont illustrés par les figures 1 à 2 (épaisseur 50 mm) et 3 à 4 (épaisseur 102 mm) et 5 (épaisseur 130 mm).
Les résultats des essais de corrosion sous contrainte obtenus sont présentés dans le Tableau 4 ci-dessous.

**Tableau 4 : Résultats des essais de corrosion sous contrainte**

| | Epaisseur | Déformation permanente (traction contrôlée) | Température de revenu | Durée de revenu | Niveau de contrainte (Mpa) | Direction | Nombre de jours sans défaillance |
|---|---|---|---|---|---|---|---|
| 54 | 50 mm | 4% | 150°C | 40 | 450 | TC et TL | 30 |
| 54 | 102 mm | 4% | 150°C | 40 | 350 | TC | 30 |
| 55 | 50 mm | 4% | 150°C | 40 | 450 | TC et TL | 30 |
| 55 | 102 mm | 4% | 150°C | 40 | 350 | TC | 30 |
| 56 | 50 mm | 4% | 150°C | 40 | 450 | TC et TL | 30 |
| 56 | 102 mm | 4% | 150°C | 40 | 350 | TC | 30 |
| 57 | 102 mm | 4% | 150°C | 40 | 350 | TC | 30 |

### Exemple 2

Dans cet exemple, plusieurs plaques d'épaisseur 120 mm dont la composition est donnée dans le tableau 5 ont été coulées.

**Tableau 5 : Composition en % en poids Al-Cu-Li coulés sous forme de plaque.**

| Alliage | Cu | Mn | Mg | Zn | Li | Ag | Zr | Fe | Si | Ti |
|---|---|---|---|---|---|---|---|---|---|---|
| 58 | 3,68 | 0,33 | 0,30 | 0,68 | 0,81 | 0,00 | 0,10 | 0,021 | 0,015 | 0,025 |
| 59 | 3,64 | 0,35 | 0,32 | 0,00 | 0,85 | 0,12 | 0,10 | 0,023 | 0,015 | 0,025 |
| 61 | 3,64 | 0,34 | 0,51 | 0,66 | 0,84 | 0,00 | 0,10 | 0,020 | 0,015 | 0,025 |
| 62 | 3,67 | 0,35 | 0,33 | 0,70 | 0,86 | 0,14 | 0,10 | 0,020 | 0,015 | 0,025 |

Les plaques ont été usinée jusqu'à l'épaisseur 100 mm. Les plaques ont été homogénéisées à environ 500 °C pendant environ 12 heures puis scalpées. Après homogénéisation, les plaques ont été laminées à chaud pour obtenir des tôles ayant une épaisseur de 27 mm. Les tôles ont été mises en solution et trempées à l'eau froide ou avec de l'eau à 90 °C de façon à faire varier la vitesse de trempe et tractionnées avec un allongement permanent de 3,5%.

Les tôles ont subi un revenu compris entre 15 h et 50 h à 155 °C. Des échantillons ont été prélevés à mi-épaisseur pour mesurer les caractéristiques mécaniques statiques en traction ainsi que la ténacité K_{Q}. Les éprouvettes utilisées pour la mesure de ténacité dans la direction T - L avaient une largeur W = 50 mm et une épaisseur B = 25 mm. Les critères de validité de K_{1C} ont été remplis pour tous les échantillons. Pour la direction S - L les mesures ont été réalisées sur des éprouvettes de largeur W = 36 mm et d'épaisseur B = 25,4 mm Les résultats obtenus sont présentés dans les tableaux 6 et 7.

**Tableau 6 : Propriétés mécaniques obtenues pour les différentes tôles après trempe à l'eau à 90 °C**

| | Durée de revenu (h) | RmTL (MPa) | Rp02TL (MPa) | A%TL | K1C T-L (MPa √m) | Kq S-L (MPa √m) |
|---|---|---|---|---|---|---|
| **58** | 15 | 495 | 441 | 10,3 | 28,4 | 30,3 |
| | 18 | 506 | 455 | 9,6 | 26,3 | 26,2 |
| | 24 | 514 | 466 | 8,8 | 24,7 | 26,6 |
| | 50 | 521 | 476 | 8,5 | 23,5 | 23,7 |
| **59** | 15 | 485 | 427 | 11,1 | 28,5 | 28,5 |
| | 18 | 496 | 443 | 7,6 | 26,2 | 26,0 |
| | 24 | 505 | 453 | 10,3 | 25,2 | 25,3 |
| | 50 | 510 | 463 | 9,2 | 23,6 | 24,1 |
| **61** | 15 | 496 | 435 | 8,5 | 30,9 | 37,0 |
| | 18 | 512 | 453 | 7,1 | 29,8 | 27,5 |
| | 24 | 521 | 466 | 7,6 | 27,7 | 25,6 |
| | 50 | 530 | 480 | 5,9 | 23,4 | 24,7 |
| **62** | 15 | 517 | 462 | 10,1 | 25,4 | 26,3 |
| | 18 | 524 | 470 | 9,1 | 24,3 | 23,6 |
| | 24 | 528 | 475 | 8,4 | 23,6 | 23,7 |
| | 50 | 532 | 483 | 6,4 | 21,4 | 23,0 |

**Tableau 7 : Propriétés mécaniques obtenues pour les différentes tôles après trempe à l'eau à 25 °C**

| | Durée de revenu (h) | RmTL (MPa) | Rp02TL (MPa) | A%TL | K1C T-L (MPa √m) | Kq S-L (MPa √m) |
|---|---|---|---|---|---|---|
| **58** | 15 | 503 | 455 | 10,7 | 48,0 | 60,9 |
| | 18 | 512 | 465 | 10,7 | 46,9 | 62,1 |
| | 24 | 520 | 474 | 10,7 | 43,8 | 55,2 |
| | 50 | 530 | 488 | 8,9 | 38,9 | 51,1 |
| **59** | 15 | 507 | 458 | 11,7 | 45,4 | 53,1 |
| | 18 | 516 | 471 | 11,5 | 42,1 | 52,0 |
| | 24 | 522 | 478 | 11,4 | 41,4 | 49,1 |
| | 50 | 531 | 491 | 10,0 | 38,1 | 44,9 |
| **61** | 15 | 505 | 450 | 10,2 | 46,1 | 59,2 |
| | 18 | 522 | 474 | 7,3 | 40,9 | 54,2 |
| | 24 | 535 | 487 | 8,0 | 40,6 | 52,2 |
| | 50 | 546 | 501 | 7,1 | 34,7 | 44,5 |
| **62** | 15 | 530 | 481 | 12,4 | 45,7 | 53,4 |
| | 18 | 539 | 493 | 11,0 | 41,3 | 51,9 |
| | 24 | 545 | 499 | 10,0 | 39,6 | 50,4 |
| | 50 | 551 | 508 | 9,9 | 35,7 | 47,5 |

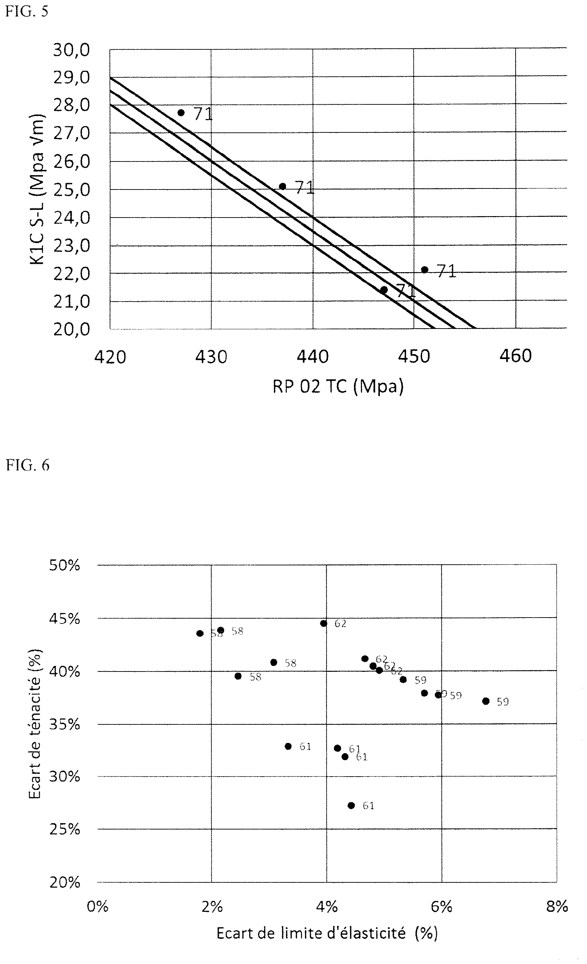

La figure 6 montre la diminution de propriété (résistance mécanique, ténacité) pour une trempe dans de l'eau à 90 °C en pourcentage par rapport à la valeur avec trempe avec de l'eau à 25°C. La composition 61 est la moins sensible à la trempe pour ce qui concerne la ténacité et la composition 58 est la moins sensible à la trempe pour ce qui concerne la limite d'élasticité.

### Exemple 3

Dans cet exemple, on a étudié l'effet des conditions de traction contrôlée et de revenu sur les résultats de ténacité Kₐₚₚ et K_{eff} mesurés par une courbe R.
Des tôles d'épaisseur 50 mm et 102 mm ont été obtenues avec les alliages 56 et 71 du tableau 1. Les tôles ont été mises en solution à 527 °C et trempées avec de l'eau froide. Les tôles en alliage 56 ont ensuite été fractionnées avec un allongement permanent de 4% et les tôles en alliage 71 ont été tractionnées avec un allongement permanent de 6%.

Les tôles en alliage 56 ont ensuite subi un revenu de 40 heures à 150 °C et le tôles en alliage 71 ont subi un revenu de 20 heures à 150 °C.

Des échantillons ont été prélevés à ½ épaisseur pour les tôles d'épaisseur 50 mm et à 1/4-épaisseur pour les tôles d'épaisseur 102 mm et 130 mm, pour mesurer les caractéristiques mécaniques statiques en traction et la ténacité en contrainte plane Kₐₚₚ et K_{eff} dans les directions L, TL, L-T et T-L Pour la ténacité, on a mesuré la courbe R sur des éprouvettes CCT de largeur W = 406 mm et d'épaisseur B = 6,35 mm.
Les résultats obtenus sont donnés dans le Tableau 8 ci-dessous.

**Tableau 8 : propriétés mécaniques mesurées**

| Epaisseur (mm) | Traction revenu | Alliage | Rp0,2 L MPa | Rp0,2 TL MPa | Kapp L-T [MPa√m] | Keff L-T [MPa√m] | Kapp T-L [MPa√m] | Keff T-L [MPa√m] |
|---|---|---|---|---|---|---|---|---|
| 50 | 4% 40h | 56 | 522 | 494 | 110 | 138 | 61 | 69 |
| 50 | 6% 20h | 71 | 510 | 487 | 114 | 146 | 74 | 81 |
| 102 | 4% 40h | 56 | 500 | 477 | 83 | 95 | 46 | 52 |
| 102 | 6% 20h | 71 | 490 | 467 | 99 | 121 | 51 | 61 |
| 130 | 6% 20h | 71 | 483 | 460 | 86 | 100 | 47 | 53 |

La combinaison d'une traction contrôlée avec une déformation permanente de 6% et de 20 heures à 150 °C est particulièrement avantageuse.

## Revendications

1. Produit laminé et/ou forgé en alliage à base d'aluminium comprenant, en % en poids,
Cu : 3,2 - 4,0;
Li : 0,80 - 0,95 ;
Zn : 0,45 - 0,70 ;
Mg : 0,15 - 0,7 ;
Zr : 0,07 - 0,15 ;
Mn : 0,1 - 0,6 ;
Ag: < 0,15 ;
Fe + Si ≤ 0,20 ;
au moins un élément parmi
Ti: 0,01 - 0,15 ;
Sc : 0,02 - 0,15, préférentiellement 0,02-0,1 ;
Cr : 0,02 - 0,3, préférentiellement 0,02-0,1 ;
Hf: 0,02 - 0,5 ;
V : 0,02 - 0,3, préférentiellement 0,02-0,1 ;
autres éléments ≤ 0,05 chacun et ≤ 0,15 au total, reste aluminium.

2. Produit selon la revendication 1 dans lequel la teneur en magnésium est au plus de (0,55 - 1,5^{∗}Ag).

3. Produit selon la revendication 1 ou la revendication 2 dans lequel la teneur en cuivre est comprise entre 3,3 et 3,8 % en poids et de préférence entre 3,4 et 3,7 % en poids.

4. Produit selon une quelconque des revendications 1 à 3 dans lequel la teneur en zinc est comprise entre 0,50 et 0,60 % en poids.

5. Produit selon une quelconque des revendications 1 à 4 dans lequel la teneur en manganèse est comprise entre 0,2 et 0,4 % en poids.

6. Produit selon une quelconque des revendications 1 à 5 dans lequel la teneur en lithium est comprise entre 0,84 % et 0,93 % en poids et de manière préférée, la teneur en lithium est au moins de 0,86 % en poids.

7. Produit selon une quelconque des revendications 1 à 6 dont l'épaisseur est au moins égale à 12 mm et de préférence au moins égale à 40 mm.

8. Produit selon une quelconque des revendications 1 à 7 dans un état laminé et/ou forgé, mis en solution, trempé, détensionné préférentiellement par traction et revenu présentant au moins un des couples de caractéristiques suivants pour des épaisseurs comprises entre 40 et 75 mm :
(i) à quart-épaisseur, une limite d'élasticité R_{p0,2}(TL) ≥ 480 MPa et de préférence R_{p0,2}(TL) ≥ 490 MPa et une ténacité Kic (T-L) ≥ 31 MPa√m et avantageusement telle que K_{1C} (T-L) ≥ - 0,175 R_{p0,2}(TL) + 119,2, de préférence K_{1C} (T-L) ≥ - 0,175 R_{p0,2}(TL) + 120,5 et de manière préférée K_{1C} (T-L) ≥ - 0,175 R_{p0,2}(TL) + 121,5,
(ii) à mi-épaisseur, une limite d'élasticité R_{p0,2}(TC) ≥ 450 MPa et de préférence R_{p0,2}(TC) ≥ 455 MPa et une ténacité K_{1C} (S-L) ≥ 24 MPa√m et avantageusement telle que K_{1C} (S-L) ≥ - 0,34 R_{p0,2}(TC) + 185,6, de préférence K_{1C} (S-L) ≥ - 0,34 R_{p0,2}(TC) + 187,2 et de manière préférée K_{1C} (S-L) ≥ - 0,34 R_{p0,2}(TC) + 188,7.

9. Produit selon une quelconque des revendications 1 à 8 présentant dans un état laminé et/ou forgé, mis en solution, trempé, détensionné préférentiellement par traction et revenu au moins un des couples de caractéristiques suivants pour des épaisseurs comprises entre 40 et 150 mm, la ténacité en contrainte plane Kₐₚₚ étant mesurée sur des éprouvettes de type CCT406, 2ao = 101,6 mm,
(i) pour des épaisseurs de 40 à 75 mm Kₐₚₚ, , dans la direction L-T d'au moins 105 MPa √m et de préférence d'au moins 110 MPa √m et une limite d'élasticité R_{p0,2}(L) d'au moins 500 MPa et de préférence d'au moins 510 MPa,
(ii) pour des épaisseurs de 40 à 75 mm Kₐₚₚ, , dans la direction T-L d'au moins 60 MPa √m et de préférence d'au moins 70 MPa √m et une limite d'élasticité R_{p0,2}(TL) d'au moins 480 MPa et de préférence d'au moins 490 MPa,
(iii) pour des épaisseurs de 76 à 120 mm Kₐₚₚ,, dans la direction L-T d'au moins 80 MPa √m et de préférence d'au moins 90 MPa √m et une limite d'élasticité R_{p0,2}(L) d'au moins 475 MPa et de préférence d'au moins 485 MPa,
(iv) pour des épaisseurs de 76 à 120 mm Kₐₚₚ, , dans la direction T-L d'au moins 40 MPa √m et de préférence d'au moins 50 MPa √m et une limite d'élasticité R_{p0,2}(TL) d'au moins 455 MPa et de préférence d'au moins 465 MPa,
(v) pour des épaisseurs de 121 à 150 mm Kₐₚₚ, , dans la direction L-T d'au moins 75 MPa √m et de préférence d'au moins 80 MPa √m et une limite d'élasticité R_{p0,2}(L) d'au moins 470 MPa et de préférence d'au moins 480 MPa,
(vi) pour des épaisseurs de 121 à 150 mm Kₐₚₚ, , dans la direction T-L d'au moins 40 MPa √m et de préférence d'au moins 45 MPa √m et une limite d'élasticité R_{p0,2}(TL) d'au moins 445 MPa et de préférence d'au moins 455 MPa,

10. Produit selon une quelconque des revendications 1 à 9 dans lequel la teneur en magnésium est au moins 0,34 % en poids et la teneur en argent est inférieure à 0,05 % en poids.

11. Produit selon la revendication 10 dans un état laminé et/ou forgé, mis en solution, trempé, détensionné préférentiellement par traction et revenu présentant au moins un des couples de caractéristiques suivants pour des épaisseurs comprises entre 76 et 150 mm :
(i) pour des épaisseurs de 76 à 120 mm, à quart-épaisseur, une limite d'élasticité R_{p0,2}(TL) ≥ 460 MPa et de préférence R_{p0,2}(TL) ≥ 470 MPa et une ténacité K_{1C} (T-L) ≥ 27 MPa√m et avantageusement telle que K_{1C} (T-L) ≥ - 0,1 R_{p0,2}(TL) + 77, de préférence K_{1C} (T-L) ≥ - 0,1 R_{p0,2}(TL) + 78 et de manière préférée K_{1C} (T-L) ≥ - 0,1 R_{p0,2}(TL) + 79,
(ii) pour des épaisseurs de 76 à 120 mm, à mi-épaisseur, une limite d'élasticité R_{p0,2}(TC) ≥ 435 MPa et de préférence R_{p0,2}(TC) ≥ 445 MPa et une ténacité Kic (S-L) ≥ 23MPa√m et avantageusement telle que Kic (S-L) ≥ - 0,25 R_{p0,2}(TC) + 139,25, de préférence K_{1C} (S-L) ≥ - 0,25 R_{p0,2}(TC) + 140,85 et de manière préférée K_{1C} (S-L) ≥ - 0,25 R_{p0,2}(TC) + 142,45,
(iii) pour des épaisseurs de 121 à 150 mm, à mi-épaisseur, une limite d'élasticité R_{p0,2}(TC) ≥ 420 MPa et de préférence R_{p0,2}(TC) ≥ 425 MPa et une ténacité Kic (S-L) ≥ 20 MPa√m et avantageusement telle que Kic (S-L) ≥ - 0,25 R_{p0,2}(TC) + 133, de préférence K_{1C} (S-L) ≥ - 0,25 R_{p0,2}(TC) + 133, 5 et de manière préférée K_{1C} (S-L) ≥ - 0,25 R_{p0,2}(TC) + 134.

12. Produit selon une quelconque des revendications 1 à 11 dans un état laminé et/ou forgé, mis en solution, trempé, détensionné préférentiellement par traction et revenu dont le nombre de jours avant défaillance testé selon les normes ASTM G47 et G49 à mi-épaisseur pour une contrainte de 350 MPa dans la direction TC est au moins 30 jours et de préférence, notamment pour des tôles dont l'épaisseur est comprise entre 40 et 75 mm, le nombre de jours avant défaillance pour une contrainte de 450 MPa dans la direction TC est au moins 30 jours.

13. Procédé de fabrication d'un produit laminé et/ou forgé à base d'alliage d'aluminium dans lequel
a) on élabore un bain de métal liquide à base d'aluminium en alliage selon une quelconque des revendications 1 à 10 ;
b) on coule une forme brute à partir dudit bain de métal liquide ;
c) on homogénéise ladite forme brute à une température comprise entre 450°C et 550° et de préférence entre 480 °C et 530°C pendant une durée comprise entre 5 et 60 heures ;
d) on déforme à chaud et optionnellement à froid ladite forme brute préférentiellement jusqu'à une épaisseur d'au moins 12 mm, préférentiellement d'au moins 15 mm et, plus préférentiellement encore d'au moins 40 mm en un produit laminé et/ou forgé ;
e) on met en solution entre 490 et 530 °C pendant 15 min à 8 h et on trempe ledit produit ;
f) on détensionne, préférentiellent par traction, de façon contrôlée ledit produit avec une déformation permanente de 1 à 7 % et préférentiellement d'au moins 4%;
g) on réalise un revenu dudit produit comprenant un chauffage à une température comprise entre 130 et 170 ° C, préférentiellement entre 140 et 160°C et, plus préférentiellement encore entre 140 et 150°C pendant 5 à 100 heures et de préférence de 10 à 50h.

14. Procédé selon la revendication 13 dans lequel la traction contrôlée est réalisée avec une déformation permanente comprise entre 5 et 7% et la durée de revenu est comprise entre 10 et 30 heures.

15. Elément de structure d'avion, de préférence élément intrados ou extrados dont la peau et les raidisseurs proviennent d'un même produit de départ, un longeron ou une nervure, comprenant un produit selon une quelconque des revendications 1 à 12.

## Patentansprüche

1. Walz- und/oder Schmiedeprodukt aus einer Legierung auf Aluminiumbasis aufweisend, in Gew.-%,
Cu: 3,2 - 4,0;
Li: 0,80 - 0,95;
Zn: 0,45 - 0,70;
Mg: 0,15 - 0,7;
Zr: 0 07 - 0,15;
Mn: 0,1 - 0,6;
Ag: < 0,15;
Fe + Si ≤ 0,20;
wenigstens eines der Elemente
Ti: 0,01 - 0,15;
Sc: 0,02 - 0,15, vorzugsweise 0,02 - 0,1;
Cr: 0,02 - 0,3, vorzugsweise 0,02 - 0,1;
Hf: 0,02 - 0,5;
V: 0,02 - 0,3, vorzugsweise 0,02 - 0,1;
weitere Elemente jeweils ≤ 0,05 und insgesamt ≤ 0,15, Rest Aluminium.

2. Produkt nach Anspruch 1, wobei der Magnesiumgehalt höchstens (0,55 - 1,5^{∗}Ag) beträgt.

3. Produkt nach Anspruch 1 oder Anspruch 2, wobei der Kupfergehalt zwischen 3,3 und 3,8 Gew.-% und vorzugsweise zwischen 3,4 und 3,7 Gew.-% liegt.

4. Produkt nach irgendeinem der Ansprüche 1 bis 3, wobei der Zinkgehalt zwischen 0,50 und 0,60 Gew.-% liegt.

5. Produkt nach irgendeinem der Ansprüche 1 bis 4, wobei der Mangangehalt zwischen 0,2 und 0,4 Gew.-% liegt.

6. Produkt nach irgendeinem der Ansprüche 1 bis 5, wobei der Lithiumgehalt zwischen 0,84 und 0,93 Gew.-% liegt und in bevorzugter Weise mindestens 0,86 Gew.-% beträgt.

7. Produkt nach irgendeinem der Ansprüche 1 bis 6, dessen Dicke mindestens 12 mm und vorzugsweise mindestens 40 mm beträgt.

8. Produkt nach irgendeinem der Ansprüche 1 bis 7 in einem gewalzten und/oder geschmiedeten, lösungsgeglühten, abgeschreckten, vorzugsweise durch Recken spannungsarm gemachten und ausgelagerten Zustand, aufweisend mindestens eines der folgenden Merkmalspaare bei Dicken zwischen 40 und 75 mm:
(i) in 1/4 Dicke: eine Streckgrenze R_{p0,2}(TL) ≥ 480 MPa und vorzugsweise R_{p0,2}(TL) ≥ 490 MPa und eine Bruchzähigkeit K_{IC} (T-L) ≥ 31 MPa√m und vorzugsweise eine solche Bruchzähigkeit, dass K_{IC} (T-L) ≥ - 0,175 R_{p0,2}(TL) + 119,2, bevorzugt K_{IC} (T-L) ≥ - 0,175 R_{p0,2}(TL) + 120,5 und weiter bevorzugt K_{IC} (T-L) ≥ - 0,175 R_{p0,2}(TL) + 121,5,
(ii) in halber Dicke: eine Streckgrenze R_{p0,2}(TC) ≥ 450 MPa und vorzugsweise R_{p0,2}(TC) ≥ 455 MPa und eine Bruchzähigkeit K_{IC} (S-L) ≥ 24 MPa√m und vorzugsweise eine solche Bruchzähigkeit, dass K_{IC} (S-L) ≥ - 0,34 R_{p0,2}(TC) + 185,6, bevorzugt K_{IC} (S-L) ≥ - 0,34 R_{p0,2}(TC) + 187,2 und weiter bevorzugt K_{IC}(S-L) ≥ - 0,34 R_{p0,2}(TC) + 188,7.

9. Produkt nach irgendeinem der Ansprüche 1 bis 8, welches in einem gewalzten und/oder geschmiedeten, lösungsgeglühten, abgeschreckten, vorzugsweise durch Recken spannungsarm gemachten und ausgelagerten Zustand mindestens eines der folgenden Merkmalspaare bei Dicken zwischen 40 und 150 mm aufweist, wobei die Bruchzähigkeit bei flächiger Belastung Kₐₚₚ an CCT406-Proben, 2ao = 101,6 mm gemessen wird :
(i) bei Dicken von 40 bis 75 mm: Kₐₚₚ in L-T-Richtung von mindestens 105 MPa√m und vorzugsweise mindestens 110 MPa√m und eine Streckgrenze R_{p0,2}(L) von mindestens 500 MPa und vorzugsweise mindestens 510 MPa,
(ii) bei Dicken von 40 bis 75 mm: Kₐₚₚ in T-L-Richtung von mindestens 60 MPa√m und vorzugsweise mindestens 70 MPa√m und eine Streckgrenze R_{p0,2}(TL) von mindestens 480 MPa und vorzugsweise mindestens 490 MPa,
(iii) bei Dicken von 76 bis 120 mm: Kₐₚₚ in L-T-Richtung von mindestens 80 MPa√m und vorzugsweise mindestens 90 MPa√m und eine Streckgrenze R_{p0,2}(L) von mindestens 475 MPa und vorzugsweise mindestens 485 MPa,
(iv) bei Dicken von 76 bis 120 mm: Kₐₚₚ in T-L-Richtung von mindestens 40 MPa√m und vorzugsweise mindestens 50 MPa√m und eine Streckgrenze R_{p0,2}(TL) von mindestens 455 MPa und vorzugsweise mindestens 465 MPa,
(v) bei Dicken von 121 bis 150 mm: Kₐₚₚ in L-T-Richtung von mindestens 75 MPa√m und vorzugsweise mindestens 80 MPa√m und eine Streckgrenze R_{p0,2}(L) von mindestens 470 MPa und vorzugsweise mindestens 480 MPa,
(vi) bei Dicken von 121 bis 150 mm: Kₐₚₚ in T-L-Richtung von mindestens 40 MPa√m und vorzugsweise mindestens 45 MPa√m und eine Streckgrenze R_{p0,2}(TL) von mindestens 445 MPa und vorzugsweise mindestens 455 MPa.

10. Produkt nach irgendeinem der Ansprüche 1 bis 9, wobei der Magnesiumgehalt mindestens 0,34 Gew.-% beträgt und der Silbergehalt unter 0,05 Gew.-% liegt.

11. Produkt nach Anspruch 10 in einem gewalzten und/oder geschmiedeten, lösungsgeglühten, abgeschreckten, vorzugsweise durch Recken spannungsarm gemachten und ausgelagerten Zustand, aufweisend mindestens eines der folgenden Merkmalspaare bei Dicken zwischen 76 und 150 mm:
(i) bei Dicken von 76 bis 120 mm, in 1/4 Dicke, eine Streckgrenze R_{p0,2}(TL) ≥ 460 MPa und vorzugsweise R_{p0,2}(TL) ≥ 470 MPa und eine Bruchzähigkeit K_{IC} (T-L) ≥ 27 MPa√m und vorzugsweise eine solche Bruchzähigkeit, dass K_{IC} (T-L) ≥ - 0,1 R_{p0,2}(TL) + 77, bevorzugt K_{IC} (T-L) ≥ - 0,1 R_{p0,2}(TL) + 78 und weiter bevorzugt K_{IC} (T-L) ≥ - 0,1 R_{p0,2}(TL) + 79,
(ii) bei Dicken von 76 bis 120 mm, in halber Dicke, eine Streckgrenze R_{p0,2}(TC) ≥ 435 MPa und vorzugsweise R_{p0,2}(TC) ≥ 445 MPa und eine Bruchzähigkeit K_{IC} (S-L) ≥ 23 MPa√m und vorzugsweise eine solche Bruchzähigkeit, dass K_{IC} (S-L) ≥ - 0,25 R_{p0,2}(TC) + 139,25, bevorzugt K_{IC} (S-L) ≥ - 0,25 R_{p0,2}(TC) + 140,85 und weiter bevorzugt K_{IC} (S-L) ≥ - 0,25 R_{p0,2}(TC) + 142,45,
(iii) bei Dicken von 121 bis 150 mm, in halber Dicke, eine Streckgrenze R_{p0,2}(TC) ≥ 420 MPa und vorzugsweise R_{p0,2}(TC) ≥ 425 MPa und eine Bruchzähigkeit K_{IC} (S-L) ≥ 20 MPa√m und vorzugsweise eine solche Bruchzähigkeit, dass K_{IC} (S-L) ≥ - 0,25 R_{p0,2}(TC) + 133, bevorzugt K_{IC} (S-L) ≥ - 0,25 R_{p0,2}(TC) + 133,5 und weiter bevorzugt K_{IC} (S-L) ≥ - 0,25 R_{p0,2}(TC) + 134.

12. Produkt nach irgendeinem der Ansprüche 1 bis 11 in einem gewalzten und/oder geschmiedeten, lösungsgeglühten, abgeschreckten, vorzugsweise durch Recken spannungsarm gemachten und ausgelagerten Zustand, bei dem die Zahl der Tage bis zum Ausfall, geprüft nach den Normen ASTM G47 und G49 in halber Dicke, bei einer Belastung von 350 MPa in TC-Richtung mindestens 30 Tage beträgt und in bevorzugter Weise, insbesondere bei Blechen mit einer Dicke zwischen 40 und 75 mm, die Zahl der Tage bis zum Ausfall bei einer Belastung von 450 MPa in TC-Richtung mindestens 30 Tage beträgt.

13. Verfahren zur Herstellung eines Walz- und/oder Schmiedeprodukts aus einer Legierung auf Aluminiumbasis, bei dem
a) ein Flüssigmetallbad auf Aluminiumbasis aus einer Legierung nach irgendeinem der Ansprüche 1 bis 10 hergestellt wird;
b) aus dem Flüssigmetallbad eine Rohform gegossen wird;
c) die Rohform bei einer Temperatur zwischen 450°C und 550°C und vorzugsweise zwischen 480°C und 530°C für eine Dauer von 5 bis 60 Stunden homogenisiert wird;
d) die Rohform warm und optional kalt vorzugsweise bis auf eine Dicke von mindestens 12 mm, bevorzugt mindestens 15 mm und besonders bevorzugt mindestens 40 mm zu einem Walz- und/oder Schmiedeprodukt umgeformt wird;
e) das Produkt zwischen 490 und 530°C für 15 min bis 8 h lösungsgeglüht und dann abgeschreckt wird;
f) das Produkt vorzugsweise durch Recken kontrolliert spannungsarm gemacht wird, mit einer bleibenden Verformung von 1 bis 7 % und vorzugsweise mindestens 4 %;
g) eine Auslagerungsbehandlung des Produkts durchgeführt wird, die eine Erwärmung auf eine Temperatur zwischen 130 und 170°C, vorzugsweise zwischen 140 und 160°C und besonders bevorzugt zwischen 140 und 150°C für 5 bis 100 Stunden und vorzugsweise 10 bis 50 h umfasst.

14. Verfahren nach Anspruch 13, bei dem das kontrollierte Recken mit einer bleibenden Verformung von 5 bis 7 % durchgeführt wird und die Dauer der Auslagerungsbehandlung 10 bis 30 Stunden beträgt.

15. Strukturbauteil eines Flugzeugs, vorzugsweise Flügelunterseiten- oder Flügeloberseitenelement, dessen Außenhaut und Versteifungen aus demselben Ausgangsprodukt hergestellt sind, ein Längsträger oder eine Rippe, umfassend ein Produkt nach irgendeinem der Ansprüche 1 bis 12.

## Claims

1. Rolled and/or forged product based on aluminium comprising the following as % by weight;
Cu: 3.2 - 4.0;
Li: 0.80 - 0.95;
Zn: 0.45 - 0.70;
Mg: 0.15 - 0.7;
Zr: 0.07 - 0.15;
Mn: 0.1 - 0.6;
Ag: < 0.15;
Fe + Si: ≤ 0.20;
at least one element among
Ti: 0.01 - 0.15;
Sc: 0.02 - 0.15, preferably 0.02 - 0.1;
Cr: 0.02 - 0.3, preferably 0.02 - 0.1;
Hf: 0.02 - 0.5;
V: 0.02 - 0.3, preferably 0.02 - 0.1;
other elements ≤ 0.05 each and ≤ 0.15 in total, the remainder aluminium.

2. Product according to claim 1, wherein the magnesium content is not more than (0.55 - 1.5*Ag).

3. Product according to claim 1 or claim 2, wherein the copper content is between 3.3 and 3.8% by weight and preferably between 3.4 and 3.7% by weight.

4. Product according to any one of claims 1 to 3, wherein the zinc content is between 0.50 and 0.60% by weight.

5. Product according to any one of claims 1 to 4, wherein the manganese content is between 0.2 and 0.4% by weight.

6. Product according to any one of claims 1 to 5, wherein the lithium content is between 0.84 and 0.93% by weight and preferably, the lithium content is at least 0.86% by weight.

7. Product according to any one of claims 1 to 6, with a thickness equal to at least 12 mm and preferably equal to at least 40 mm.

8. Product according to any one of claims 1 to 7, in a rolled and/or forged state, with solution heat treatment, quenched, relaxed preferably by applying tension and aging, having at least one of the following pairs of characteristics for thicknesses between 40 and 75 mm:
(i) at quarter-thickness, a yield strength R_{p0.2}(TL) ≥ 480 MPa and preferably Rp_{0.2}(TL) ≥ 490 MPa and a toughness K_{1C} (T-L) ≥ 31 MPa√m and advantageously such that K_{1C}(T-L) ≥ - 0.175 Rp_{0.2}(TL) + 119.2, preferably K_{1C}(T-L) ≥ - 0.175 Rp_{0.2}(TL) + 120.5 and even more preferably K_{1C}(T-L) ≥ - 0.175 Rp_{0.2}(TL) + 121.5,
(ii) at mid-thickness, a yield strength Rp_{0.2}(TC) ≥ 450 MPa and preferably Rp_{0.2}(TC) ≥ 455 MPa and a toughness K_{1C} (S-L) ≥ 24 MPa√m and advantageously such that K_{1C}(S-L) ≥ - 0.34 Rp_{0.2}(TC) + 185.6, preferably K_{1C} (S-L) ≥ - 0.34 Rp_{0.2} (TC) + 187.2 and even more preferably K_{1C} (S-L) ≥ - 0.34 Rp_{0.2} (TC) + 188.7.

9. Product according to any one of claims 1 to 8, in a rolled and/or forged state, with solution heat treatment, quenched, relaxed preferably by applying tension and aging, having at least one of the following pairs of characteristics for thicknesses between 40 and 150 mm, the toughness in plane stress Kₐₚₚ being measured on CCT406 type test specimens, 2ao = 101.6 mm,
(i) for thicknesses from 40 to 75 mm Kₐₚₚ, in the L-T direction of at least 105 MPa√m and preferably at least 110 MPa√m and a yield strength Rp_{0.2}(L) of at least 500 MPa and preferably at least 510 MPa,
(ii) for thicknesses from 40 to 75 mm Kₐₚₚ, in the T-L direction of at least 60 MPa√m and preferably at least 70 MPa√m and a yield strength Rp_{0.2}(TL) of at least 480 MPa and preferably at least 490 MPa,
(iii) for thicknesses from 76 to 120 mm Kₐₚₚ, in the L-T direction of at least 80 MPa√m and preferably at least 90 MPa√m and a yield strength Rp_{0.2} (L) of at least 475 MPa and preferably at least 485 MPa,
(iv) for thicknesses from 76 to 120 mm Kₐₚₚ, in the T-L direction of at least 40 MPa√m and preferably at least 50 MPa√m and a yield strength Rp_{0.2} (TL) of at least 455 MPa and preferably at least 465 MPa,
(v) for thicknesses from 121 to 150 mm Kₐₚₚ, in the L-T direction of at least 75 MPa√m and preferably at least 80 MPa√m and a yield stress Rp_{0.2} (L) of at least 470 MPa and preferably at least 480 MPa,
(vi) for thicknesses from 121 to 150 mm Kₐₚₚ, in the T-L direction of at least 40 MPa√m and preferably at least 45 MPa√m and a yield strength Rp_{0.2} (TL) of at least 445 MPa and preferably at least 455 MPa.

10. Product according to any one of claims 1 to 9, wherein the magnesium content is at least 0.34% by weight and the silver content is less than 0.05% by weight.

11. Product according to claim 10, in a rolled and/or forged state, with solution heat treatment, quenched, relaxed preferably by applying tension and aging, having at least one of the following pairs of characteristics for thicknesses between 76 and 150 mm:
(i) for thicknesses from 76 to 120 mm, at quarter thickness, a yield strength Rp_{0.2}(TL) ≥ 460 MPa and preferably Rp_{0.2}(TL) ≥ 470 MPa and a toughness K_{1C}(T-L) ≥ 27 MPa√m and advantageously such that K_{1C}(T-L) ≥ - 0.1 Rp_{0.2}(TL) + 77, preferably K_{1C}(T-L) ≥ - 0.1 Rp_{0.2} (TL) + 78 and even more preferably K_{1C}(T-L) ≥ - 0.1 Rp_{0.2} (TL) + 79,
(ii) for thicknesses from 76 to 120 mm, at mid-thickness, a yield strength Rp_{0.2}(TC) ≥ 435 MPa and preferably Rp_{0.2}(TC) ≥ 445 MPa and a toughness K_{1C} (S-L) ≥ 23 MPa√m and advantageously such that K_{1C} (S-L) ≥ - 0.25 Rp_{0.2}(TC) + 139.25, preferably K_{1C}(S-L) ≥ - 0.25 Rp_{0.2}(TC) + 140.85 and even more preferably K_{1C} (S-L) ≥ - 0.25 Rp_{0.2} (TC) + 142.45,
(iii) for thicknesses from 121 to 150 mm, at mid-thickness, a yield strength Rp_{0.2}(TC) ≥ 420 MPa and preferably Rp_{0.2}(TC) ≥ 425 MPa and a toughness K_{1C} (S-L) ≥ 20 MPa√m and advantageously such that K_{1C}(S-L) ≥ - 0.25 Rp_{0.2}(TC) + 133, preferably K_{1C}(S-L) ≥ - 0.25 Rp_{0.2}(TC) + 133.5 and even more preferably K_{1C} (S-L) ≥ - 0.25 Rp_{0.2}(TC) + 134.

12. Product according to any one of claims 1 to 11, in a rolled and/or forged state, with solution heat treatment, quenched, relaxed preferably by applying tension and aging, for which the number of days before failure as tested using standards ASTM G47 and G49 at mid-thickness for a stress of 350 MPa in the TC direction is at least 30 days and preferably, particularly for sheets for which the thickness is between 40 and 75 mm, the number of days before failure for a stress of 450 mm in the TC direction is at least 30 days.

13. Method of fabricating a rolled and/or forged product based on aluminium alloy wherein:
a) a liquid metal bath based on aluminium alloy according to any one of claims 1 to 10 is produced;
b) an unwrought product is cast using said liquid metal bath;
c) said unwrought product is homogenised at a temperature between 450°C and 550°C and preferably between 480°C and 530°C for a duration of between 5 and 60 hours;
d) said unwrought product is hot and optionally cold worked preferably to a thickness of at least 12 mm, preferably at least 15 mm and even more preferably at least 40 mm into a rolled and/or forged product;
e) solution heat treatment is applied at between 490 and 530°C for 15 minutes to 8 hours and said product is quenched;
f) said product is relaxed, preferably by controlled tension, with a permanent set of 1 to 7% and preferably at least 4%;
g) said product is aged, including heating to a temperature of between 130 and 170°C, preferably between 140 and 160°C, and even more preferably between 140 and 150°C for 5 to 100 hours, and preferably from 10 to 50 hours.

14. Method according to claim 13, wherein the controlled tension is applied to give a permanent set of between 5 and 7% and the aging time is between 10 and 30 hours.

15. Aircraft structural component, preferably a lower or upper wing skin element wherein the skin and the stringers originate from the same initial product, a spar or a rib, comprising a product according to any one of claims 1 to 12.
